# EUROPÄISCHE PATENTSCHRIFT

(11) **EP 2 909 127 B1**
(45) Veröffentlichungstag und Bekanntmachung des Hinweises auf die Patenterteilung: **05.10.2016**
(21) Anmeldenummer: 13802216.5
(22) Anmeldetag: 17.10.2013
(51) Int. Cl.: B66C 23/90

(54) **SICHERHEITSEINRICHTUNG FÜR EINEN KRAN**
SECURING DEVICE FOR A CRANE
DISPOSITIF DE SECURITÉ POUR GRUE

(30) Priorität: 19.10.2012 AT 4072012
(43) Veröffentlichungstag der Anmeldung: 26.08.2015
(73) Patentinhaber: Palfinger AG, 5020 Salzburg (AT)
(72) Erfinder: MAYR, Clemens, A-5202 Neumarkt am Wallersee (AT); REISCHAUER, Richard, A-5231 Schalchen (AT); HABERL, Walter, A-5151 Nussdorf (AT)
(74) Vertreter: Torggler & Hofinger Patentanwälte
(86) Internationale Anmeldenummer: PCT/AT2013/000175
(87) Internationale Veröffentlichungsnummer: WO 2014/059457

(56) Entgegenhaltungen:
- WO-A1-2004/089804
- GB-A- 2 061 849
- JP-A- H 038 699
- JP-A- H0 881 181
- JP-A- H11 263 588
- JP-A- 2000 136 090
- JP-A- 2008 074 561
- RU-A- 2004 113 179

## Beschreibung

Die vorliegende Erfindung betrifft ein Verfahren zur Lagesicherung eines Krans mit den Merkmalen des Oberbegriffs des Anspruchs 1, eine Sicherheitseinrichtung für einen Kran mit den Merkmalen des Oberbegriffs des Anspruchs 2 sowie einen Kran mit einer derartigen Sicherheitseinrichtung.

Bei gattungsgemäßen Verfahren wird ein Grenzwert für die an den Stützbeinen des Krans auftretenden Stützkräfte eingegeben und bei Überschreiten der momentanen Stützkräfte an einem der Stützbeine weitere Bewegungen des Krans, die diese Stützkraft erhöhen, gesperrt. Insbesondere sind damit nicht nur Kranbewegungen betroffen, die das Kippmoment bzw. Lastmoment erhöhen, sondern auch Schwenkbewegungen, die die Belastung einer Stütze erhöhen.

Nachteilig ist hierbei, dass der eingegebene Grenzwert für alle Stützen gleichzeitig gilt. Bei wechselndem Gelände kann dies zu einem verkleinerten Einsatzbereich des Krans führen, etwa weil eine der Stützen des Krans auf einer Oberfläche abstützt, die eine sehr niedrige Festigkeit aufweist, und der Grenzwert für diese niedrige Festigkeit gewählt werden muss. Als Beispiel kann eine Situation dienen, in der alle bis auf einen der Stützbeine eines Krans auf einer asphaltierten Straße abstützen und das letzte auf weicherem Boden oder einer Schachtabdeckung.

JP 2008 074561 A offenbart den Oberbegriff der Ansprüche 1 und 2.

Aufgabe der Erfindung ist es, ein Verfahren bereit zu stellen, das den Einsatzbereich des Krans in einer solchen Situation erweitert.

Diese Aufgabe wird durch ein Verfahren mit den Merkmalen des Anspruchs 1, einer Sicherheitseinrichtung mit den Merkmalen des Anspruchs 2 sowie einem Kran mit den Merkmalen des Anspruchs 6 gelöst.

Dies geschieht, indem die Grenzwerte für die momentanen Stützkräfte an den Stützbeinen individuell oder für Teilgruppen der Stützbeine eingegeben werden können und in der Sicherheitseinrichtung abgelegt werden können.

Weitere vorteilhafte Ausführungsformen der Erfindung sind in den abhängigen Ansprüchen definiert.

In einer Ausführungsform der Erfindung kann vorgesehen sein, dass die Stützbeine als hydraulische Stützen mit einem hydraulischen Zylinder ausgebildet sind. Hierbei kann es vorgesehen sein, dass die Kraftmessung durch Dehnungsmessstreifen an den Stützbeinen oder als Druckmessgerät in den hydraulischen Zylindern ausgebildet ist.

Eine derartige Sicherheitseinrichtung kann beispielsweise bei einem Kran zum Einsatz kommen, der auf einem Fahrzeug montiert ist. Hierbei kann es sich bei dem Fahrzeug beispielsweise um einen Lastkraftwagen oder ein Schienenfahrzeug handeln.

Weitere Vorteil und Einzelheiten der Erfindung ergeben sich anhand der Figuren sowie der dazu gehörigen Figurenbeschreibung. Dabei zeigen:
- Fig. 1: ein Blockdiagramm einer erfindungsgemäßen Sicherheitseinrichtung und
- Fig. 2: eine perspektivische Darstellung eines Krans mit einer erfindungsgemäßen Sicherheitseinrichtung, wobei der Kran auf einem Fahrzeug montiert ist.

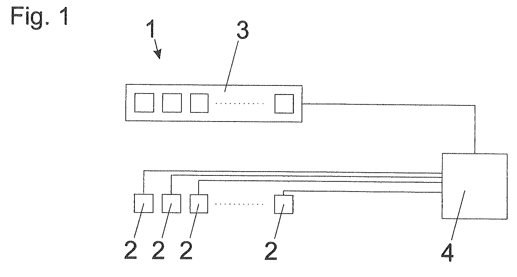

In Fig. 1 wird ein Blockdiagramm einer erfindungsgemäßen Sicherheitseinrichtung 1 gezeigt. Hierin ist die Steuereinrichtung 4 zum Einen mit den Kraftmesseinrichtungen 2 verbunden. Zum Anderen ist es mit der Eingabevorrichtung 3 verbunden, an der die Grenzwerte für die Stützbeine individuell eingestellt werden können.

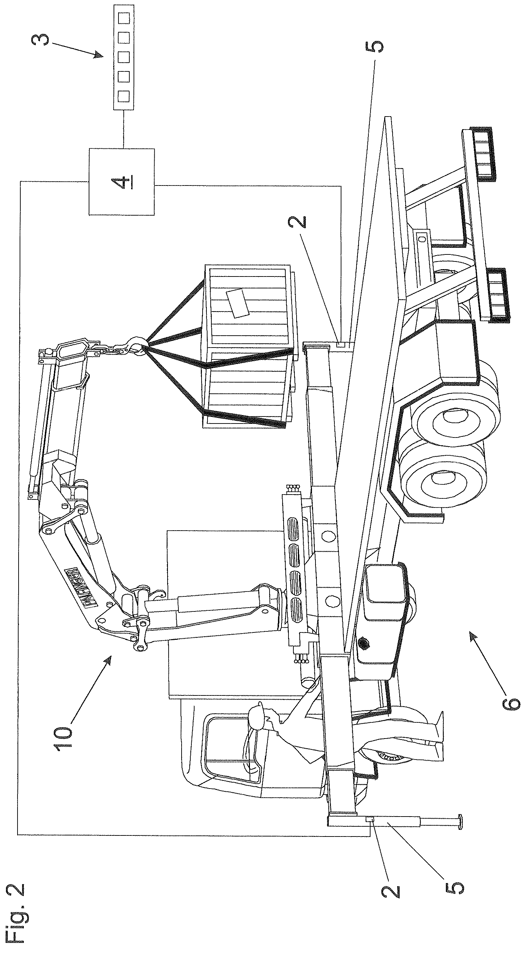

Fig. 2 zeigt einen Kran 10, der auf einem Fahrzeug 6 montiert ist, und über zwei Stützen 5 verfügt. Symbolisch sind außerdem die Kraftmesseinrichtungen 2 sowie die Steuereinheit 4 und die Eingabevorrichtung 3 dargestellt. Die Verbindung der Kraftmesseinrichtungen 2 mit der Steuereinrichtung 4 muss nicht kabelgestützt sein sondern kann auch zum Beispiel per Funk umgesetzt sein.

## Patentansprüche

1. Verfahren zur Lagesicherung eines Krans (10) mit wenigstens zwei Stützbeinen (5) zum Abstützen an Oberflächen, bei dem wenigstens ein Grenzwert für die Stützbeine (5) eingegeben wird, wobei bei Überschreiten wenigstens eines Grenzwertes durch eine momentane Stützkraft Bewegungen, die die Stützkraft erhöhen, gesperrt werden, **dadurch gekennzeichnet, dass** die Grenzwerte für jedes der Stützbeine (5) individuell und/oder für Teilgruppen von Stützbeinen (5) eingegeben werden.

2. Sicherheitseinrichtung (1) für einen Kran, verfügend über
- wenigstens zwei Stützbeine (5) zum Abstützen an Oberflächen,
- Kraftmesseinrichtungen (2) zum Bestimmen der momentanen Stützkräfte, die an den Stützbeinen (5) wirken,
- eine Eingabevorrichtung (3) zum Eingeben von wenigstens einem Grenzwert für die Stützbeine (5) und
- eine Steuereinrichtung (4), die mit den Kraftmesseinrichtungen und mit der Eingabevorrichtung (3) verbunden ist, und die bei Überschreiten wenigstens eines Grenzwertes durch die jeweilige momentane Stützkraft Bewegungen des Krans (10), die die jeweilige Stützkraft erhöhen, sperrt,
**dadurch gekennzeichnet, dass** die Grenzwerte individuell für jedes Stützbein (5) und/oder für Teilgruppen von Stützbeinen (5) eingebbar sind und in der Steuereinrichtung (4) ablegbar sind.

3. Sicherheitseinrichtung (1) nach Anspruch 2, wobei die Stützbeine (5) als hydraulische Stützen mit einem hydraulischen Zylinder ausgebildet sind.

4. Sicherheitseinrichtung (1) nach mindestens einem der Ansprüche 2 oder 3, wobei die Kraftmesseinrichtungen (2) als Dehnungsmessstreifen an den Stützbeinen (5) ausgebildet sind.

5. Sicherheitseinrichtung (1) nach mindestens einem der Ansprüche 2 oder 3, wobei die Kraftmesseinrichtungen (2) als Druckmessgeräte in den hydraulischen Zylindern ausgebildet sind.

6. Kran mit einer Sicherheitseinrichtung nach wenigstens einem der Ansprüche 2 bis 5.

7. Fahrzeug mit einem Kran nach Anspruch 6.

8. Fahrzeug nach Anspruch 7, wobei das Fahrzeug (6) als Lastkraftwagen ausgebildet ist.

9. Fahrzeug nach Anspruch 7, wobei das Fahrzeug (6) als Schienenfahrzeug ausgebildet ist.

## Claims

1. A method of securing a position of a crane (10) having at least two support legs (5) for support on surfaces, in which at least one limit value is input for the support legs (5), wherein when at least one limit value is exceeded by an instantaneous supporting force movements which increase the supporting force are blocked, **characterised in that** the limit values for each of the support legs (5) are input individually and/or for subgroups of support legs (5).

2. A safety device (1) for a crane having
- at least two support legs (5) for support on surfaces,
- force measuring devices (2) for determining the instantaneous supporting forces which act at the support legs (5),
- an input device (3) for the input of at least one limit value for the support legs (5), and
- a control device (4) which is connected to the force measuring devices and to the input device (3) and which when at least one limit value is exceeded by the respective instantaneous supporting force movements of the crane (10) which increase the respective supporting force are blocked,
**characterised in that** the limit values can be input individually for each support leg (5) and/or for subgroups of support legs (5) and can be stored in the control device (4).

3. A safety device (1) as set forth in claim 2 wherein the support legs (5) are in the form of hydraulic supports with a hydraulic cylinder.

4. A safety device (1) as set forth in at least one of claims 2 and 3 wherein the force measuring devices (2) are in the form of strain gauges at the support legs (5).

5. A safety device (1) as set forth in at least one of claims 2 and 3 wherein the force measuring devices (2) are in the form of pressure measuring devices in the hydraulic cylinders.

6. A crane having a safety device as set forth in at least one of claims 2 through 5.

7. A vehicle having a crane as set forth in claim 6.

8. A vehicle as set forth in claim 7 wherein the vehicle (6) is in the form of a truck.

9. A vehicle as set forth in claim 7 wherein the vehicle (6) is in the form of a rail vehicle.

## Revendications

1. Procédé pour bloquer en position une grue (10) comprenant au moins deux pieds de support (5) destinés au support au niveau de surfaces, dans le cadre duquel au moins une valeur limite pour les pieds de support (5) est entrée, dans lequel en cas de dépassement au moins d'une valeur limite par une force de support instantanée, des déplacements, qui élèvent la force de support, sont bloqués, **caractérisé en ce que** les valeurs limites pour chacun des pieds de support (5) sont entrées individuellement et/ou pour des groupes partiels de pieds de support (5).

2. Système de sécurité (1) pour une grue, disposant
- d'au moins deux pieds de support (5) destinés au support au niveau de surfaces,
- de systèmes de mesure de force (2) pour déterminer les forces de support instantanées, qui agissent au niveau des pieds de support (5),
- d'un dispositif d'entrée (3) pour entrer au moins une valeur limite pour les pieds de support (5), et
- d'un système de commande (4), qui est relié aux systèmes de mesure de force et au dispositif d'entrée (3) et qui bloque, en cas de dépassement au moins d'une valeur limite par la force de support respective instantanée, des déplacements de la grue (10), qui élèvent la force de support respective,
**caractérisé en ce que** les valeurs limites peuvent être entrées individuellement pour chaque pied de support (5) et/ou pour des groupes partiels de pieds de support (5) et peuvent être sauvegardées dans le système de commande (4).

3. Système de sécurité (1) selon la revendication 2, dans lequel les pieds de support (5) sont réalisés sous la forme de supports hydrauliques pourvus d'un vérin hydraulique.

4. Système de sécurité (1) selon au moins l'une quelconque des revendications 2 ou 3, dans lequel les systèmes de mesure de force (2) sont réalisés sous la forme de jauges extensométriques au niveau des pieds de support (5).

5. Système de sécurité (1) selon au moins l'une quelconque des revendications 2 ou 3, dans lequel les systèmes de mesure de force (2) sont réalisés sous la forme d'appareils de mesure de pression dans les vérins hydrauliques.

6. Grue comprenant un système de sécurité selon au moins l'une quelconque des revendications 2 à 5.

7. Véhicule comprenant une grue selon la revendication 6.

8. Véhicule selon la revendication 7, dans lequel le véhicule (6) est réalisé sous la forme d'un camion.

9. Véhicule selon la revendication 7, dans lequel le véhicule (6) est réalisé sous la forme d'un véhicule sur rails.
